# EUROPÄISCHE PATENTSCHRIFT

(11) **EP 2 804 893 B1**
(45) Veröffentlichungstag und Bekanntmachung des Hinweises auf die Patenterteilung: **02.09.2015**
(21) Anmeldenummer: 13700585.6
(22) Anmeldetag: 18.01.2013
(51) Int. Cl.: C08J 5/00

(54) **VERWENDUNG VON FUNKTIONALISIERTEN POLYMERISATEN ALS LOW-PROFILE-ADDITIVE (LPA)**
USE OF FUNCTIONALIZED POLYMERS AS LOW-PROFILE ADDITIVES (LPAS)
UTILISATION DE POLYMÉRISATS FONCTIONNALISÉS EN TANT QU'AGENTS ANTI-RETRAIT (LPA)

(30) Priorität: 19.01.2012 DE 102012200735
(43) Veröffentlichungstag der Anmeldung: 26.11.2014
(73) Patentinhaber: Wacker Chemie AG, 81737 München (DE)
(72) Erfinder: HASHEMZADEH, Abdulmajid, 84508 Burgkirchen (DE); ZARKA, Michael Tobias, 84503 Altötting (DE)
(74) Vertreter: Ege, Markus
(86) Internationale Anmeldenummer: PCT/EP2013/050981
(87) Internationale Veröffentlichungsnummer: WO 2013/107889

(56) Entgegenhaltungen:
- EP-A1- 0 075 765
- EP-A1- 0 337 931
- WO-A1-2010/108791
- DE-A1-102006 019 686
- DE-A1-102009 001 498
- US-A- 3 718 714

## Beschreibung

Die Erfindung betrifft die Verwendung von funktionalisierten Polymerisaten als Low-Profile-Additive (LPA).

Für die Herstellung von Komposit-Bauteilen werden häufig radikalisch vernetzbare Polymerisatzusammensetzungen auf Basis von beispielsweise ungesättigten Polyesterharzen (UP-Harze) eingesetzt. Ungesättigte Polyesterharze sind erhältlich durch Polykondensation von Dicarbonsäuren oder Dicarbonsäureanhyd-. riden mit Polyolen. Die radikalisch vernetzbaren Polymerisatzusammensetzungen enthalten des Weiteren Monomere mit ethylenisch ungesättigten Gruppen, im Allgemeinen Styrol. Styrol wird der radikalisch vernetzbaren Polymerisatzusammensetzung beispielsweise zugegeben, um das vernetzbare Polymerisat zu lösen und um sicherzustellen, dass die radikalisch vernetzbare Polymerisatzusammensetzung eine fließfähige Masse ist. Als weitere Bestandteile enthalten die radikalisch vernetzbaren Polymerisatzusartimensetzungen oftmals noch Fasermaterialien wie Glasfasern, Carbonfasern oder entsprechende Fasermatten (Fiber Reinforced Plastic composites = FPR composites), die zu einer Verstärkung der durch Aushärtung der radikalisch vernetzbaren Polymerisat-zusammensetzungen erhältlichen Komposit-Bauteile führen.

Ein Problem bei der Verarbeitung solcher radikalisch vernetzbaren Polymerisatzusammensetzungen zu Komposit-Bauteilen ist der Volumenschwund während der Härtung der Polymerisatzusammensetzung. Zur Reduzierung des Schrumpfs bei der Aushärtung werden den radikalisch vernetzbaren Polymerisatzusammensetzungen daher sogenannte Low-Profile-Additive (LPA) zugegeben. Low-Profile-Additive reduzieren das Schrumpfen beim Aushärten, bauen Eigenspannungen ab, verringern Mikrorissbildung, und erleichtern das Einhalten von Fertigungstoleranzen.

Bei den LPA handelt es sich üblicherweise um thermoplastische Homo- oder Copolymere von Styrol, Methylmethacrylat oder Vinylacetat, welche in Form von Festharzen vorliegen und mittels Lösungspolymerisation von bestimmten ethylenisch ungesättigten Monomeren hergestellt werden. So werden in der US-A 3718714 oder der DE-A 102006019686 Copolymere auf Basis von Vinylacetat und ethylenisch ungesättigten Carbonsäuren und in der EP-A 0075765 Polymere auf Basis von Vinylacetat bzw. Alkylacrylaten, die zusätzlich ethylenisch ungesättigte Fettsäureester enthalten, als LPA empfohlen.

Die bisher als LPA gängigen Vinylester-Copolymere bewirken zwar im Vergleich zu Polystyrol- und Polymethylmethacrylat vorteilhafterweise zumeist einen großen Antischrumpfeffekt, können aber hinsichtlich der Pigmentierbarkeit nicht befriedigen. Unter guter Pigmentierbarkeit wird verstanden, dass Pigmente enthaltende radikalisch vernetzbare Polymerisatzusammensetzungen nach Aushärten zu Komposit-Bauteilen mit einem einheitlichen Farbbild führen. In solchen KompositBauteilen sind die Pigmente gleichmäßig verteilt. Bei schlechter Pigmentierbarkeit sind die Pigmente ungleichmäßig in den Komposit-Bauteilen verteilt, und es tritt ein sogenannter Marmoreffekt auf.

Die EP-A 0337931 beschreibt LPA in Form von in Wasser redispergierbaren, Polyvinylalkohol-stabilisierten Polymerpulvern auf Basis von Vinylacetat-Versaticsäure-Copolymerisaten für Verfahren, in denen Komposit-Bauteile bei niedrigen Temperaturen hergestellt werden. Polyvinylalkohol verleiht den Komposit-Bauteilen hydrophile Eigenschaften, was sich negativ auf deren Alterungsbeständigkeit auswirkt. Des Weiteren ist Polyvinylalkohol in den radikalisch vernetzbaren Polymerisatzusammensetzungen im Allgemeinen nicht vollständig löslich, was schließlich zu Komposit-Bauteilen mit einem inhomogenen, stippenhaften Erscheinungsbild führt.

Auch die in der WO-A 2010/102966 oder der WO-A 2010/108791 beschriebenen Schutzkolloid-stabilisierten Polymerpulver können bei Einsatz als LPA bezüglich der Wasseraufnahme und Alterungsbeständigkeit von Komposit-Bauteilen noch nicht voll befriedigen. Auch das Elastizitätsmodul solcher Komposit-Bauteil erfüllt nicht die höchsten Ansprüche.

Damit die LPA in den radikalisch vernetzbaren Polymerisatzusammensetzungen ihre Wirkung entfalten können, müssen die LPA mit den weiteren Komponenten der radikalisch vernetzbaren Polymerisatzusammensetzungen gleichmäßig abgemischt sein. Nachteiligerweise dauert das Auflösen der bisher bekannten LPA in Form von Festharzen bzw. in mit Polyvinylalkohol stabilisierten Polymerpulver sehr lange. Deswegen werden die LPA für gewöhnlich zuerst in Styrol homogenisiert und dann in dieser Form in die radikalisch vernetzbaren Polymerisatzusammensetzungen eingebracht. Diese Vorgehensweise erfordert also einen zusätzlichen, zeitaufwändigen Verfahrensschritt. Ein weiteres Problem stellt die Lagerung der LPA enthaltenden styrolischen Lösungen dar, da derartige Lösungen zur unkontrollierten Polymerisation neigen und zusätzlich Maßnahmen zur Verhinderung der vorzeitigen Polymerisation ergriffen werden müssen.

Vor diesem Hintergrund bestand die Aufgabe, Low-Profile-Additive (LPA) bereitzustellen, die sich in Form von Feststoffen in zumindest einer der Komponenten der radikalisch vernetzbaren Polymerisatzusammensetzungen rasch auflösen oder dispergieren lassen, und die bei Einsatz für die Herstellung von Komposit-Bauteilen zu einem großen Antischrumpfeffekt und nach Möglichkeit zu einer guten Pigmentierbarkeit führen, ohne die Alterungsbeständigkeit der Komposit-Bauteile, beispielsweise in Folge von Wasseraufnahme, negativ zu beeinflussen.

Überraschenderweise wurde diese Aufgabe im Wesentlichen mit Polymerisaten enthaltend Monomereinheiten mit funktionellen Gruppen gelöst, die mittels Emulsions- oder Suspensionspolymerisation entsprechender ethylenisch ungesättigter Monomere in wässrigem Medium sowie anschließender Trocknung der dabei gebildeten wässrigen Dispersionen erhalten wurden. Unerwarteterweise waren die so hergestellten Polymerisate beim Einsatz als LPA herkömmlichen LPA überlegen, insbesondere auch im Vergleich zu thermoplastischen Polymeren bzw. Polymeren in Form von Festharzen, die üblicherweise mittels Lösungspolymerisation hergestellt werden.

Gegenstand der Erfindung ist die Verwendung von funktionelle Gruppen tragenden Polymerisaten (funktionalisierte Polymerisate) als Low-Profile-Additive (LPA), dadurch gekennzeichnet, dass
die funktionelle Gruppen tragenden Polymerisate erhältlich sind mittels radikalisch initiierter Emulsions- oder Suspensionspolymerisation in wässrigem Medium von
a) einem oder mehreren ethylenisch ungesättigten Monomeren, die ein oder mehrere zusätzliche funktionelle Gruppen tragen ausgewählt aus der Gruppe umfassend Carboxyl-, Sulfat-, Sulfonat-, Phosphat-, Phosphonat-, Hydroxyl- und Stickstoff-funktionelle Gruppen (funktionelle Monomere), und
b) einem oder mehreren, von den Monomeren a) verschiedenen ethylenisch ungesättigten Monomeren, und
   anschließendem Trocknen der so erhaltenen wässrigen Dispersionen oder wässrigen Lösungen,
wobei in den wässrigen Dispersionen oder wässrigen Lösungen beim Trocknen ≤ 15 Gew.-%, bezogen auf das Trockengewicht der zu trocknenden wässrigen Dispersionen oder wässrigen Lösungen, an einem oder mehreren weiteren, von den funktionelle Gruppen tragenden Polymerisaten verschiedenen, gegebenenfalls Schutzkolloid-stabilisierten Polymeren (Abmischungspolymerisate) enthalten sind.

Beispiele für Monomere a) sind ethylenisch ungesättigte Carbonsäuren oder deren Salze, vorzugsweise Acrylsäure, Methacrylsäure, Crotonsäure, Itaconsäure und Fumarsäure, Maleinsäure; Monoester der Fumarsäure oder Maleinsäure oder deren Salze, wie die Ethyl- und Isopropylester; mit einer oder mehreren Hydroxy-Gruppen substituierte Methacrylsäureester oder Acrylsäureester von Carbonsäuren mit unverzweigten oder verzweigten Alkoholen mit 1 bis 15 C-Atomen, wie Hydroxypropylacrylat oder Hydroxyethylacrylat; ethylenisch ungesättigte Sulfonsäuren oder deren Salze, vorzugsweise Vinylsulfonsäure, 2-Acrylamido-2-methyl-propansulfonsäure; ethylenisch ungesättigte Phosphonsäuren oder deren Salze, vorzugsweise Vinylphosphonsäure.

Besonders bevorzugte Monomere a) sind ethylenisch ungesättigte Mono- oder Dicarbonsäuren mit 2 bis 15-C-Atomen, insbesondere 2 bis 10 C-Atomen, oder mit einer oder mehreren Hydroxy-Gruppen substituierte Methacrylsäureester oder Acrylsäureester von Carbonsäuren mit unverzweigten oder verzweigten Alkoholen mit 1 bis 15 C-Atomen; am meisten bevorzugt sind Hydroxyethylacrylat, Acrylsäure oder Methacrylsäure.

Die Monomere a) werden vorzugsweise zu 0,5 bis 15 Gew.-%, besonders bevorzugt zu 1 bis 10 Gew.-% und am meisten bevorzugt 2 bis 8 Gew.-% eingesetzt, jeweils bezogen auf die Gesamtmasse der insgesamt eingesetzten ethylenisch ungesättigten Monomere zur Herstellung der funktionalisierten Polymerisate.

Der Massenanteil der Hydroxyl-Gruppen in den funktionalisierten Polymerisaten beträgt vorzugsweise ≤ 10 Gew.-%, bezogen auf die Gesamtmasse eines funktionalisierten Polymerisats. Eine Hydroxyl-Gruppe ist eine an ein Kohlenstoffatom gebundene OH-Gruppe.

Bevorzugte Monomere b) werden ausgewählt aus der Gruppe umfassend Vinylester von Carbonsäuren mit 1 bis 15 C-Atomen, Methacrylsäureester oder Acrylsäureester von Carbonsäuren mit unverzweigten oder verzweigten Alkoholen mit 1 bis 15 C-Atomen, Vinylaromaten, Vinylhalogenide, Diene und Olefine.

Geeignete Vinylester sind beispielsweise Vinylacetat, Vinylpropionat, Vinylbutyrat, Vinyl-2-ethylhexanoat, Vinyllaurat, 1-Methylvinylacetat, Vinylpivalat und Vinylester von alpha-verzweigten Monocarbonsäuren mit 5 bis 13 C-Atomen, beispielsweise VeoVa9R, VeoVa10R oder VeoVa11R (Handelsnamen der Firma Shell).

Geeignete Methacrylsäureester oder Acrylsäureester sind beispielsweise Methylacrylat, Methylmethacrylat, Ethylacrylat, Ethylmethacrylat, Propylacrylat, Propylmethacrylat, n-Butylacrylat, n-Butylmethacrylat, 2-Ethylhexylacrylat, Norbornylacrylat.

Geeignete Diene oder Olefine sind beispielsweise Propylen, 1,3-Butadien oder insbesondere Ethen. Geeignete Vinylaromaten sind beispielsweise Styrol und Vinyltoluol. Ein geeignetes Vinylhalogenid ist beispielsweise Vinylchlorid.

Die Monomere b) werden vorzugsweise zu 85 bis 99,5 Gew.-%, besonders bevorzugt zu 90 bis 99 Gew.-% und am meisten bevorzugt 92 bis 98 Gew.-% eingesetzt, jeweils bezogen auf die Gesamtmasse der insgesamt eingesetzten ethylenisch ungesättigten Monomere zur Herstellung der funktionalisierten Polymerisate.

Bei Einsatz von mehreren Monomeren b) wird vorzugsweise mindestens ein Monomer b1) eingesetzt ausgewählt aus der Gruppe umfassend Butylacrylat, Butylmethacrylat, 2-Ethylhexylacrylat und Vinylester von alpha-verzweigten Monocarbonsäuren mit 5 bis 13 C-Atomen, beispielsweise VeoVa10R oder VeoVa11R (Handelsnamen der Firma Shell), und mindestens ein Monomer b2) ausgewählt aus der Gruppe umfassend Methylacrylat, Methylmethacrylat, Styrol und Methylstyrol.

Bevorzugte Monomere b1) sind 2-Ethylhexylacrylat und insbesondere Butylacrylat. Die Monomere b1) werden vorzugsweise zu 0,5 bis 42 Gew.-%, besonders bevorzugt zu 5 bis 25 Gew.-% und am meisten bevorzugt zu 6 bis 15 Gew.-% einbesetzt, jeweils bezogen auf die Gesamtmasse der insgesamt eingesetzten Monomere zur Herstellung der funktionalisierten Polymerisate.

Bevorzugte Monomere b2) sind Methylacrylat, Methylmethacrylat und insbesondere Styrol. Die Monomere b2) werden vorzugsweise zu 50 bis 99 Gew.-%, besonders bevorzugt zu 70 bis 95 Gew.-% und am meisten bevorzugt zu 80 bis 90 Gew.-% einbesetzt, jeweils bezogen auf die Gesamtmasse der insgesamt eingesetzten Monomere zur Herstellung der funktionalisierten Polymerisate.

Bevorzugt werden funktionalisierte Polymerisate auf Basis von
a) 0,5 bis 8 Gew.-% an einem oder mehreren Monomeren ausgewählt aus der Gruppe umfassend, Crotonsäure, Itaconsäure, Fumarsäure und Maleinsäure sowie vorzugsweise Hydroxyethylacrylat, Acrylsäure und Methacrylsäure;
b1) 4,5 bis 22 Gew.-% an einem oder mehreren Monomeren ausgewählt aus der Gruppe umfassend Vinylester von alpha-verzweigten Monocarbonsäuren mit 5 bis 13 C-Atomen, beispielsweise VeoVa9R oder VeoVa10R (Handelsnamen der Firma Shell), 2-Ethylhexylacrylat sowie vorzugsweise Butylacrylat und Butylmethacrylat; und
b2) 70 bis 95 Gew.-% an einem oder mehreren Monomeren ausgewählt aus der Gruppe umfassend umfassend Methylacrylat, Methylmethacrylat, Styrol und Methylstyrol;
wobei sich die Angaben in Gew.-% auf jeweils 100 Gew.-% aufaddieren.

Funktionalisierte Polymerisate enthaltend Monomer-Einheiten b1) und b2) haben besonders vorteilhafte Löslichkeitseigenschaften und führen zu Komposit-Bauteilen mit besonders vorteilhaften mechanischen Eigenschaften.

Die funktionalisierten Polymerisate haben vorzugsweise Glasübergangstemperaturen Tg von mindestens 40°C, besonders bevorzugt von 50 bis 120°C und am meisten bevorzugt von 70 bis 100°C.

Die Wasserlöslichkeit der funktionalisierten Polymerisate beträgt unter Normalbedingungen nach DIN50014 vorzugsweise ≤ 1 g/l. Die Löslichkeit bzw. Dispergierbarkeit der funktionalisierten Polymerisate in reaktiven Monomeren, insbesondere Styrol, beträgt bei Temperaturen von 20 bis 150°C vorzugsweise ≥ 10 g/l.

Die funktionalisierten Polymerisate bilden in Styrol eine Lösung bzw. eine Dispersion. Lösungen oder Dispersionen von funktionalisierten Polymerisaten in Styrol haben bei einem Feststoffgehalt von 30% eine Brookfieldviskosität von vorzugsweise 1.000 bis 10.000 mPas, besonders bevorzugt 2.000 bis 9.000 mPas und am meisten bevorzugt 5.000 bis 8.000 mPas (Bestimmung mittels eines Brookfieldviskosimeters, bei 23°C, unter Verwendung von Spindel 3 bei 20 Umdrehungen pro Minute). Funktionalisierte Polymerisate mit niedrigeren Brookfieldviskositäten führen zu Kompositbauteilen mit schlechterer Pigmentierbarkeit. Höhere Brookfieldviskositäten wirken sich nachteilig auf die Verarbeitungseigenschaften von radikalisch vernetzbaren Polymerisatzusammensetzungen aus.

Die funktionalisierten Polymerisate haben in Folge ihrer Herstellung nach Emulsions- oder Suspensionspolymerisationsverfahren in wässrigem Medium im Allgemeinen eine Kern-Schale-Struktur und sind folglich im Allgemeinen heterogen bzw. ungleichmäßig aus den unterschiedlichen Monomereinheiten aufgebaut. Im Allgemeinen besteht der Kern der funktionalisierten Polymerisate vorwiegend aus unpolaren Monomereinheiten, insbesondere aus Einheiten der Monomere b), und die Schale der funktionalisierten Polymerisate vorwiegend aus polaren Monomereinheiten, insbesondere aus Einheiten der Monomere a). Ohne an eine Theorie gebunden zu sein, kann angenommen werden, dass sich diese Strukturmerkmale der funktionalisierten Polymerisate vorteilhaft auf deren Anwendungseigenschaften als LPA auswirken. Gängige, nach Lösungspolymerisation hergestellte LPA liegen als Feststoff als sogenannte Festharze bzw. als Thermoplaste vor und sind in Folge des Lösungspolymerisationsverfahrens homogen aus den unterschiedlichen Monomereinheiten aufgebaut und zeigen keine Kern-Schale Struktur.

Die Monomerauswahl bzw. die Auswahl der Gewichtsanteile der Monomere a) und b) erfolgt dabei so, dass im Allgemeinen die oben genannten Glasübergangstemperatur Tg der der funktionalisierten Polymerisate erhalten werden. Die Glasübergangstemperatur Tg kann in bekannter Weise mittels Differential Scanning Calorimetry (DSC) ermittelt werden. Die Tg kann auch mittels der Fox-Gleichung näherungsweise vorausberechnet werden. Nach Fox T. G., Bull. Am. Physics Soc. 1, 3, page 123 (1956) gilt: 1/Tg = x1/Tg1 + x2/Tg2 + ... + xn/Tgn, wobei xn für den Massebruch (Gew.-%/100) des Monomeren n steht, und Tgn die Glasübergangstemperatur in Kelvin des Homopolymeren des Monomeren n ist. Tg-Werte für Homopolymerisate sind in Polymer Handbook 2nd Edition, J. Wiley & Sons, New York (1975) aufgeführt.

Die funktionalisierten Polymerisate können mittels Suspensionspolymerisation, Miniemulsionspolymerisation oder vorzugsweise Emulsionspolymerisation der Monomere a) und b) hergestellt werden. Es wird also vorzugsweise in Wasser polymerisiert. Im Allgemeinen wird also kein Lösungspolymerisationsverfahren durchgeführt. Das wässrige Medium enthält vorzugsweise ≤ 10 Gew.-% an organischen Lösungsmitteln, bezogen auf Wasser und organische Lösungsmittel. Die Polymerisation erfolgt im Allgemeinen in Abwesenheit von organischen Lösungsmitteln. Organische Lösungsmittel sind beispielsweise Alkohole oder Ester, wie Methanol, Ethanol oder Propanol.

Die Polymerisationstemperatur ist vorzugsweise zwischen 40°C und 100°C, besonders bevorzugt zwischen 60°C und 90°C. Die Polymerisation erfolgt vorzugsweise bei pH-Werten von 2 bis 7, besonders bevorzugt von 3 bis 5, und kann mit den üblichen organischen oder anorganischen Säuren, Basen oder Puffern, wie beispielsweise Phosphorsäure, Kohlensäure, Carbonsäuren oder Ammoniak oder deren Salze, eingestellt werden. Bei der Copolymerisation von gasförmigen Monomeren wie Ethylen, 1,3-Butadien oder Vinylchlorid kann auch unter Druck, im Allgemeinen zwischen 5 bar und 100 bar, gearbeitet werden.

Die Initiierung der Polymerisation erfolgt mit den für die Emulsionspolymerisation bzw. Suspensionspolymerisation gebräuchlichen wasserlöslichen bzw. monomerlöslichen Initiatoren oder Redox-Initiator-Kombinationen. Beispiele für wasserlösliche Initiatoren sind die Natrium-, Kalium- und Ammoniumsalze der Peroxodischwefelsäure, Wasserstoffperoxid, t-Butylperoxid, t-Butylhydroperoxid, Kaliumperoxodiphosphat, tert.-Butylperoxopivalat, Cumolhydroperoxid, Isopropylbenzolmonohydroperoxid, Azobisisobutyronitril. Beispiele für monomerlösliche Initiatoren sind Dicetylperoxydicarbonat, Dicyclohexylperoxydicarbonat, Dibenzoylperoxid. Die genannten Initiatoren werden im Allgemeinen in einer Menge von 0, 1 bis 5 Gew.-%, vorzugsweise 0,1 bis 1 Gew.-% und am meisten bevorzugt 0,1 bis 0,5 Gew.-%, jeweils bezogen auf das Gesamtgewicht der Monomere, eingesetzt.

Als Redox-Initiatoren verwendet man Kombinationen aus den genannten Initiatoren und Reduktionsmitteln. Geeignete Reduktionsmittel sind die Sulfite und Bisulfite der Alkalimetalle und von Ammonium, beispielsweise Natriumsulfit, die Derivate der Sulfoxylsäure wie Zink- oder Alkaliformaldehydsulfoxylate, beispielsweise Natriumhydroxymethansulfinat, und Ascorbinsäure. Die Reduktionsmittelmenge beträgt im allgemeinen 0,001 bis 0,03 Gew.-%, vorzugsweise 0,001 bis 0,015 Gew.-%, jeweils bezogen auf das Gesamtgewicht der Monomere.

Zur Steuerung des Molekulargewichts können während der Polymerisation regelnde Substanzen eingesetzt werden. Falls Regler eingesetzt werden, werden diese üblicherweise in Mengen zwischen 0,1 bis 1,0 Gew.-%, vorzugsweise 0,2 bis 0,6 Gew.-% und am meisten bevorzugt 0,3 bis 0,5 Gew.-%, bezogen auf die zu polymerisierenden Monomeren, eingesetzt. Die regelnden Substanzen können separat oder auch vorgemischt mit Reaktionskomponenten dosiert werden. Beispiele solcher Substanzen sind n-Dodecylmercaptan, tert.-Dodecylmercaptan, Mercaptopropionsäure, Mercaptopropionsäuremethylester, Isopropanol und Acetaldehyd.

Der erfindungsgemäße Einsatz von Reglern wirkt sich vorteilhaft auf die Verarbeitbarkeit von radikalisch vernetzbaren Polymerisatzusammensetzungen sowie auf die Pigmentierbarkeit von Kompositbauteilen aus.

Im Allgemeinen wird in Gegenwart von Emulgatoren polymerisiert. Üblicherweise werden 0,1 bis 5 Gew.-%, vorzugsweise 0,2 bis 4 Gew.-% und am meisten bevorzugt 0,5 bis 3 Gew.-% Emulgatoren eingesetzt, bezogen auf die Monomermenge. Geeignete Emulgatoren sind sowohl anionische, kationische als auch nichtionische Emulgatoren, beispielsweise anionische Tenside, wie Alkylsulfate mit einer Kettenlänge von 8 bis 18 C-Atomen, Alkyl- oder Alkylarylethersulfate mit 8 bis 18 C-Atomen im hydrophoben Rest und bis zu 40 Ethylen- oder Propylenoxideinheiten, Alkyl- oder Alkylarylsulfonate mit 8 bis 18 C-Atomen, Ester und Halbester der Sulfobernsteinsäure mit einwertigen Alkoholen oder Alkylphenolen, oder nichtionische Tenside wie Alkylpolyglykolether oder Alkylarylpolyglykolether mit 8 bis 40 Ethylenoxid-Einheiten.

Es kann in Gegenwart von 0 bis 10 Gew.-%, insbesondere 0,1 bis 7 Gew.-% an Schutzkolloiden, bezogen auf die Monomermenge, polymerisiert werden, wie beispielsweise Polyvinylalkohole, wie weiter unten bei der Beschreibung der Abmischungspolymerisate angegeben. Die Polymerisation zur Herstellung der funktionalisierten Polymerisate wird vorzugsweise in Abwesenheit von Schutzkolloiden durchgeführt.

Die Polymerisation kann unter Vorlage aller oder einzelner Bestandteile des Reaktionsgemisches, oder unter teilweiser Vorlage und Nachdosierung aller oder einzelner Bestandteile des Reaktionsgemisches, oder nach dem Dosierverfahren ohne Vorlage durchgeführt werden. Vorzugsweise wird so vorgegangen, dass ein Teil der Monomere a), der Monomere b) und ein Teil des Wassers und Reglers und Initiators vorgelegt werden und die verbleibende Menge an Monomer a), Monomer b), Regler, Initiators und gegebenenfalls Wasser zudosiert wird. Bei Durchführung eines Batch-Verfahrens werden alle Monomere, Wasser und Regler und ein Teil des Initiators vorgelegt, und der Initiatorrest wird zudosiert oder stoßweise zugegeben.

Nach Abschluss der Polymerisation kann zur Restmonomerentfernung in Anwendung bekannter Methoden nachpolymerisiert werden, im Allgemeinen durch mit Redoxkatalysator initiierter Nachpolymerisation. Flüchtige Restmonomere können auch mittels Destillation, vorzugsweise unter reduziertem Druck, und gegebenenfalls unter Durchleiten oder Überleiten von inerten Schleppgasen wie Luft, Stickstoff oder Wasserdampf entfernt werden.

Die so erhältlichen wässrigen Dispersionen oder Lösungen haben einen Feststoffgehalt von vorzugsweise 20 bis 70 Gew.-% und besonders bevorzugt von 30 bis 60 Gew.-%. Die Dispersionen oder Lösungen werden vorzugsweise durch Zugabe von Wasser auf 20 bis 50 Gew.-%, insbesondere 30 bis 45 Gew.-% verdünnt.

Die funktionalisierten Polymerisate in Form von wässrigen Lösungen oder Dispersionen haben mittlere Partikeldurchmesser von vorzugsweise 40 und 200 nm und besonders bevorzugt 60 und 120 nm (Bestimmung nach Coulter).

Die funktionalisierten Polymerisate in Form von wässrigen Dispersionen oder wässrigen Lösungen können nach gängigen Verfahren getrocknet werden, wie beispielsweise mittels Wirbelschichttrocknung, Gefriertrocknung, Walzentrockner oder Sprühtrocknung. Vorzugsweise werden die Dispersionen sprühgetrocknet. Die Sprühtrocknung erfolgt dabei in üblichen Sprühtrocknungsanlagen, wobei die Zerstäubung mittels Ein-, Zwei- oder Mehrstoffdüsen oder mit einer rotierenden Scheibe erfolgen kann. Die Austrittstemperatur wird im Allgemeinen im Bereich von 45°C bis 120°C, bevorzugt 60°C bis 90°C, je nach Anlage, Tg des Harzes und gewünschtem Trocknungsgrad, gewählt.

Das Trocknen kann in Gegenwart von Trocknungshilfen, vorzugsweise aber in Abwesenheit von Trocknungshilfen durchgeführt werden. Als Trocknungshilfen sind beispielsweise die weiter unten bei der Beschreibung der Abmischungspolymerisate genannten Schutzkolloide, insbesondere Polyvinylalkohole, geeignet.

Die Dispersionen oder Lösungen enthaltend funktionalisierte Polymerisate oder deren Trocknungsprodukte enthalten vorzugsweise kein Schutzkolloid.

Zur Verbesserung der anwendungstechnischen Eigenschaften der funktionalisierten Polymerisate können vor, während oder nach dem Trocknen ein oder mehrere,Zusatzstoffe zugegeben werden, wie anorganische Komponenten, beispielsweise Flammschutzmittel, Silicasole mit 0,2 bis 120 nm Partikeldurchmesser (bestimmt mittels Coulter). Zur Erhöhung der Lagerfähigkeit kann das erhaltene Polymerpulver mit einem Antiblockmittel (Antibackmittel), vorzugsweise bis 1 bis 10 Gew.-%, insbesondere 2 bis 4 Gew.-%, bezogen auf das Gesamtgewicht polymerer Bestandteile, ausgerüstet werden. Beispiele für Antiblockmittel sind Ca- bzw. Mg-Carbonat, Talk, Gips, Kieselsäure, Kaoline, Metakaolin, kalziniertes Kaolin, Silicate mit Teilchengrößen vorzugsweise im Bereich von 10 nm bis 100 µm.

Der mittlere Partikeldurchmesser der funktionalisierten Polymerisate in Form von deren Pulver, d.h. der Trocknungsprodukte, liegt vorzugsweise zwischen 20 und 200 Mikrometer, besonders bevorzugt zwischen 40 und 120 Mikrometer und am meisten bevorzugt zwischen 40 und 100 Mikrometer (Bestimmung nach Coulter).

Die weiteren Polymere (Abmischungspolymerisate), die von den funktionelle Gruppen tragenden Polymerisaten verschieden sind, sind erhältlich durch radikalisch initiierte Polymerisation von einem oder mehreren ethylenisch ungesättigten Monomeren c) ausgewählt aus der Gruppe umfassend Vinylester von Carbonsäuren mit 1 bis 15 C-Atomen, Methacrylsäureester oder Acrylsäureester von Carbonsäuren mit unverzweigten oder verzweigten Alkoholen mit 1 bis 15 C-Atomen, Vinylaromaten, Vinylhalogenide, Diene und Olefine.

Als Monomere c) sind beispielsweise dieselben Monomere geeignet, die für die Monomere b) als geeignet aufgeführt sind. Bevorzugte Monomere c) sind Vinylacetat, VeoVa10R, VeoVa11R (Handelsnamen der Firma Shell), Methylacrylat, Methylmethacrylat, n-Butylacrylat, 2-Ethylhexylacrylat, Styrol und Ethylen. Am meisten bevorzugt ist Vinylacetat, Methylacrylat, Methylmethacrylat oder Styrol.

Gegebenenfalls können noch 0,05 bis 5 Gew.-%, vorzugsweise 1 bis 2 Gew.-%, bezogen auf das Gesamtgewicht der Abmischungspolymerisate, Hilfsmonomere copolymerisiert werden. Beispiele für Hilfsmonomere sind ethylenisch ungesättigte Carbonsäuren, vorzugsweise Acrylsäure, Methacrylsäure, Crotonsäure, Itaconsäure oder Fumarsäure, Maleinsäure, ethylenisch ungesättigte Carbonsäurenitrile, vorzugsweise Acrylnitril; Mono- und Diester der Fumarsäure und Maleinsäure wie die Diethyl- und Diisopropylester, sowie Maleinsäureanhydrid, ethylenisch ungesättigte Sulfonsäuren bzw. deren Salze, vorzugsweise Vinylsulfonsäure, 2-Acrylamido-2-methyl-propansulfonsäure.

Bevorzugte Abmischungspolymerisate sind Vinylacetat-Homopolymerisate, Vinylacetat-Crotonsäure-Copolymerisate, Styrol-Homopolymerisate, Styrol-Butadien-Copolymerisate, Methylmethacrylat-Homopolymerisate oder Copolymerisate von Methylmethacrylat und Acrylsäure oder Methacrylsäure.

Die Herstellung der Abmischungspolymerisate erfolgt vorzugsweise in wässrigem Medium und bevorzugt nach dem Emulsions- oder Suspensionspolymerisationsverfahren - wie beispielsweise in der DE-A 102006007282 beschrieben. Die Abmischungspolymerisate fallen dabei in Form von wässrigen Dispersionen an. Bei der Polymerisation können die gängigen Schutzkolloide und/oder Emulgatoren eingesetzt werden, wie in der DE-A 102006007282 beschrieben. Bevorzugt werden als Schutzkolloide teilverseifte oder vollverseifte Polyvinylalkohole mit einem Hydrolysegrad von 80 bis 100 Mol-%, insbesondere teilverseifte Polyvinylalkohole mit einem Hydrolysegrad von 80 bis 94 Mol-% und einer Höpplerviskosität, in 4 %-iger wässriger Lösung von 1 bis 30 mPas (Methode nach Höppler bei 20°C, DIN 53015). Die genannten Polyvinylalkohole sind mittels dem Fachmann bekannter Verfahren zugänglich. Die Schutzkolloide werden im Allgemeinen in einer Menge von insgesamt 1 bis 20 Gew.-%, bezogen auf das Gesamtgewicht der Monomere, bei der Polymerisation zur Herstellung der Abmischungspolymerisate zugesetzt.

Die Abmischungspolymerisate in Form von wässrigen Dispersionen können nach den oben genannten Trocknungsverfahren in Pulver überführt werden. Dabei wird in der Regel eine Trocknungshilfe in einer Gesamtmenge von 3 bis 30 Gew.-%, vorzugsweise 5 bis 20 Gew.-%, bezogen auf die polymeren Bestandteile der Dispersion, eingesetzt. Als Trocknungshilfe sind die vorgenannten Polyvinylalkohole bevorzugt.

Die Abmischungspolymerisate können mit den funktionalisierten Polymerisaten während, nach oder vorzugsweise vor dem Trocknen gemischt werden.

Vorzugsweise sind in den wässrigen Dispersionen oder wässrigen Lösungen enthaltend funktionalisierte Polymerisate beim Trocknen ≤ 10 Gew.-%, mehr bevorzugt ≤ 5 Gew.-%, besonders bevorzugt ≤ 1 Gew.-% an einem oder mehreren Abmischungspolymerisate enthalten, wobei sich die Angaben in Gew.-% auf den Festgehalt der wässrigen Dispersionen oder wässrigen Lösungen bezieht. Am meisten bevorzugt sind keine Abmischungspolymerisate zugegen. Die funktionalisierte Polymerisate in Form von Pulvern enthalten also vorzugsweise ≤ 15 Gew.-%, mehr bevorzugt ≤ 10 Gew.-%, noch mehr bevorzugt ≤ 5 Gew.-%, besonders bevorzugt ≤ 1 Gew.-% und am meisten bevorzugt 0 Gew.-% an einem oder mehreren Abmischungspolymerisaten.

Radikalisch vernetzbare Polymerisatzusammensetzungen enthaltend ein oder mehrere radikalisch vernetzbare Polymerisate, ein oder mehrere ethylenisch ungesättigte Monomere (reaktive Monomere) und gegebenenfalls Initiatoren, gegebenenfalls Füllstoffe sowie gegebenenfalls weitere Zusätze, dadurch gekennzeichnet, dass zusätzlich ein oder mehrere erfindungsgemäße funktionalisierte Polymerisate enthalten sind.

Als reaktive Monomere sind dieselben Monomere geeignet bzw. bevorzugt, die auch für die Polymerisation zur Herstellung der funktionalisierten Polymerisate geeignet bzw. bevorzugt sind. Besonders bevorzugte reaktive Monomere sind Styrol, Methylmethacrylat, Methylacrylat und Butylacrylat. Das am meisten bevorzugte reaktive Monomer ist Styrol.

Bevorzugte radikalisch vernetzbare Polymerisate sind ungesättigte Polyesterharze oder Vinylesterharze.

Die ungesättigten Polyesterharze sind Reaktionsprodukte von einer oder mehreren Dicarbonsäuren oder einer oder mehreren Dicarbonsäureanhydriden mit einem oder mehreren Polyolen. Die Herstellung der ungesättigten Polyesterharze ist dem Fachmann bekannt.

Vinylesterharze sind Reaktionsprodukte, die durch Polyadditionen oder Veresterungsreaktionen von Phenolderivaten und ethylenisch ungesättigten Mono- oder Dicarbonsäuren oder Dicarbonsäureanhydriden mit 3 bis 20-Kohlenstoffatomen, wie beispielsweise Acrylsäuren oder Methacrylsäuren entstehen. Bevorzugte Phenolderivate sind Bisphenol A und Phenol-Novolak. Die Herstellung der Vinylesterharze ist dem Fachmann bekannt.

Geeignete Initiatoren für die radikalisch vernetzbaren Polymerisatzusammensetzungen sind beispielsweise t-Butylperbenzoat, t-Butylperoxy-2-ethylhexanoat, t-Butylperoxypivalat, t-Butylperoxyneodecanoat, Dibenzoylperoxid, t-Amylperoxypivalat, Di-(2-ethylhexyl)peroxydicarbonat, 1,1-Bis(t-Butylperoxy)-3,3,5-trimethylcyclohexan, Di-(4-t-Butylcyclohexyl)-peroxydicarbonat, Azobisisobutyronitril oder Photoinitiatoren wie Benzophenon, Isopropyl-thioxanthon, Benzile (1,2 Diketone),Hydroxy-alkylketone, α-Aminoketone, Benzilketale.

Geeignete Füllstoffe sind beispielsweise Talkum, Aluminiumhydroxid, Kaolin, Calciumcarbonat, Dolomit, Glaskugeln oder Glasfasern, Quarz, Aluminiumoxid oder Bariumsulfat.

Die radikalisch vernetzbaren Polymerisatzusammensetzungen enthalten vorzugsweise 30 bis 60 Gew.-Teile radikalisch vernetzbare Polymerisate, 5 bis 40 Gew.-Teile erfindungsgemäße funktionalisierte Polymerisate, 30 bis 160 Gew.-Teile reaktive Monomere, gegebenenfalls 0,5 bis 2 Gew.-Teile Initiatoren, gegebenenfalls Füllstoffe wie 50 bis 350 Gew.-Teile Calciumcarbonat, Verstärkungsmaterialien, wie 25 bis 450 Gew.-Teile Glasfasern, Aramidfasern, Kohlefasern, gegebenenfalls weitere Additive, wie 0,5 bis 3 Gew.-Teile Formtrennmittel, beispielsweise Zinkstearat, sowie gegebenenfalls weitere Zusatzstoffe, beispielsweise Pigmente, Verdicker, flammhemmende Zusätze.

Die radikalisch vernetzbaren Polymerisatzusammensetzungen sind erhältlich durch Mischen von einem oder mehreren radikalisch vernetzbaren Polymerisaten, einem oder mehreren ethylenisch ungesättigten Monomeren (reaktive Monomere) und gegebenenfalls von Initiatoren, gegebenenfalls von Füllstoffen, gegebenenfalls von Verstärkungsmaterialien sowie gegebenenfalls von weiteren Zusätzen, dadurch gekennzeichnet, dass zusätzlich ein oder mehrere funktionalisierte Polymerisate in Form von deren Pulver beigemischt werden.

Die funktionalisierten Polymerisate in Form von deren Pulver können mit den weiteren Komponenten der radikalisch vernetzbaren Polymerisatzusammensetzungen in beliebiger Weise gemischt werden. Beispielsweise können die funktionalisierten Polymerisate in reaktiven Monomeren gelöst, emulgiert oder dispergiert werden und in dieser Form mit den weiteren Komponenten der radikalisch vernetzbaren Polymerisatzusammensetzungen gemischt werden. Die funktionalisierten Polymerisate werden vorzugsweise mit den radikalisch vernetzbaren Polymerisaten, den reaktiven Monomeren und gegebenenfalls weiteren flüssigen oder gelösten Komponenten der radikalisch vernetzbaren Polymerisatzusammensetzungen gemischt und anschließend mit den restlichen Komponenten der radikalisch vernetzbaren Polymerisatzusammensetzungen, wie Füllstoffen und Verstärkungsmaterialien, gemischt. Alternativ kann auch zuerst eine flüssige Paste aus radikalisch vernetzbaren Polymerisaten, reaktiven Monomeren und gegebenenfalls weiteren Komponenten der radikalisch vernetzbaren Polymerisatzusammensetzungen hergestellt werden, der anschließend funktionalisierte Polymerisaten sowie gegebenenfalls die restlichen Mengen an den restlichen Bestandteilen der radikalisch vernetzbaren Polymerisatzusammensetzungen zugegeben werden.

Das Mischen der Komponenten zur Herstellung der radikalisch vernetzbaren Polymerisatzusammensetzungen kann unter Einsatz der gängigen, dem Fachmann bekannten Vorrichtungen, wie beispielsweise Reaktoren, Rührkessel oder Mischer, und Rührer, wie beispielsweise Flügel-, Anker- oder Blattrührer, durchgeführt werden.

Komposit-Bauteile sind erhältlich durch Härten der erfindungsgemäßen radikalisch vernetzbaren Polymerisatzusammensetzungen.

Das Härten der radikalisch vernetzbaren Polymerisatzusammensetzungen erfolgt vorzugsweise bei Temperaturen von ≥ 0°C, besonders bevorzugt von 20 bis 200°C und am meisten bevorzugt von 20 bis 165°C. Vorzugsweise erfolgt das Härten in Gegenwart von einem oder mehreren Initiatoren durch radikalisch initiierte Polymerisation. Gegebenenfalls werden die radikalisch vernetzbaren Polymerisatzusammensetzungen beim Härten bei der jeweiligen Temperatur unter Anwendung von Drücken von ≥ 1 mbar, besonders bevorzugt von 1 bis 200.000 mbar und am meisten bevorzugt von 1.000 bis 200.000 mbar verpresst.

Die Komposit-Bauteile können nach allen gängigen Herstellungsverfahren aus den radikalisch vernetzbaren Polymerisatzusammensetzungen erhalten werden, wie beispielsweise mittels der Sheet Molding Compound Technology (SMC), Bulk Molding Compound Technology (BMC), Resin Transfer Molding (RTM) oder Resin Injection Molding (RIM).

Vorzugsweise werden die Komposit-Bauteile mittels der BMC-Technik (Bulk Molding Compound) oder der SMC-Technik (Sheet Molding Compound) hergestellt.

Bei dem BMC-Verfahren werden die Lösungen der radikalisch vernetzbaren Polymerisate in reaktivem Monomer und die Schutzkolloid-stabilisierten Polymerisate in Form von deren Pulver und gegebenenfalls die weiteren Komponenten wie der Initiator, Füllstoff, Formtrennmittel oder weitere Polymerisate, Low-Profile-Additive oder Zusatzstoffe zu einer pastösen Masse vermischt, danach werden gegebenenfalls Glasfasern zugemischt, und anschließend werden die so erhaltenen radikalisch vernetzbaren Polymerisatzusammensetzungen unter Anwendung von Druck und Temperatur zum Komposit-Bauteil ausgehärtet. Beispielsweise werden mit dieser Technik Reflektoren für Autoscheinwerfer hergestellt.

Bei dem SMC-Verfahren wird analog dem BMC-Verfahren eine pastöse Masse aus styrolischer Polyesterharz-Lösung, Schutzkolloid-stabilisierten Polymerisaten in Form von deren Pulver, Vernetzungskatalysator, Füllstoff, Formtrennmittel sowie gegebenenfalls weiteren Zusatzstoffen hergestellt, welche auf zwei Trägerfolien aufgetragen wird. Anschließend werden geschnittene Glasfaserrovings auf eine der beiden Schichten aufgestreut und schließlich beide Trägerfolien miteinander vereint, so dass die erzeugten Schichten miteinander in Kontakt kommen. Es folgt eine Kompaktierung durch ein System von Walzen. Der resultierende flächige SMC-Compound wird dann aufgerollt und mindestens drei Tage unter definierten Bedingungen gelagert, was als Reifung bezeichnet wird. Schließlich wird das flächige Sandwich von der Folie abgezogen, in Stücke geschnitten und unter Anwendung von Druck und Temperatur zu Formteilen verpresst. Formteile, welche mittels dieser Technik hergestellt werden, werden beispielsweise als Heckklappen von Automobilen eingesetzt.

Die erfindungsgemäßen funktionalisierten Polymerisate sind in fester Form rieselfähig sowie blockfest, lagerstabil und lassen sich rasch in reaktiven Monomeren auflösen, emulgieren oder dispergieren und somit rasch in radikalisch aushärtbare Polymerisat-Zusammensetzungen einarbeiten. Polymerisate in Form von Festharzen sind dagegen im Allgemeinen klebrig, neigen zum Verblocken. Die erfindungsgemäßen funktionalisierten Polymerisate führen bei Einsatz als LPA zu sehr guten Antischrumpfeigenschaften und auch zu einer sehr guten Pigmentierbarkeit der Komposit-Bauteile. Erfindungsgemäß hergestellte Komposit-Bauteile sind wenig hydrophil und neigen nicht dazu, Wasser aufzunehmen, was sich auch positiv auf die Alterungsbeständigkeit der Komposit-Bauteile auswirkt. Dieser Effekt zeigt sich insbesondere auch gegenüber den bisher bekannten, unter Einsatz von Schutzkolloid-stabilisierten Polymeren hergestellten Komposit-Bauteilen. Im Vergleich zu Schutzkolloid-stabilisierten Polymeren ermöglichen die funktionalisierten Polymerisate einfachere Herstellverfahren, da erfindungsgemäß mit einer einzigen Polymerkomponente als LPA gearbeitet werden kann, und somit keine Kombination aus Schutzkolloiden und weiteren Polymerisaten erforderlich ist. Es war besonders überraschend, dass die erfindungsgemäße Aufgabe mit den funktionalisierten Polymerisaten auch in Abwesenheit einer weiteren Polymerkomponente in überlegener Weise gelöst werden konnte. Zudem führen die erfindungsgemäßen LPA im Vergleich zu herkömmlichen Schutzkolloid-stabilisierten Polymeren auch zu Komposit-Bauteilen mit verbessertem Elastizitätsmodul.

Die nachfolgenden Beispiele dienen zur weiteren Erläuterung der Erfindung, ohne diese in irgendeiner Weise einzuschränken.

### Herstellung von Polymerdispersionen

### Polymerdispersion 1:

In einem 3-Liter-Dreihalskolben, ausgestattet mit einem Rückflusskühler und Ankerrührer, wurden als Emulgatoren 11,4g Natriumlaurylsulfat und 11,4g Genapol PF 20 (Fa. Clariant) in 1271g deionisiertem Wasser aufgelöst. Danach wurden 1,7gKaliumperoxodisulfat, 1,5g Ammoniaklösung (12,5%-ig in Wasser) und 210g Monomermischung von Dosierung 1 vorgelegt und unter Stickstoff unter Rühren (Drehzahl 150 U/Min) auf 8.0°C aufgeheizt.

### Dosierung 1 (Monomermischung) :

| | |
|---|---|
| Methacrylsäure | 45,3g |
| Butylacrylat | 124,9g |
| Styrol | 942,2g |
| Hydroxyethylacrylat | 22,7g |
| Dodecylmercaptan | 4,5g |

### Dosierung 2 (Initiatorlösung):

| | |
|---|---|
| Wasser | 107,8g |
| Ammoniak (12,5%ig) | 1,0g |
| Kaliumperoxodisulfat | 1,7g |

Bei 80°C startete die Polymerisation. 30 Minuten nach dem Start der Polymerisation wurde aus einem separaten Behälter mit der Dosierung der verbleibenden Menge der Monomermischung (Dosierung 1) und der Initiatorlösung (Dosierung 2) begonnen. Die Dosierzeiten bei Dosierung 1 lagen bei 2 Stunden und bei Dosierung 2 bei 2,5 Stunden. Nach den Dosierungen wurde 2 Stunden bei 85°C nachpolymerisiert.

Nach der Abkühlung wurde die Dispersion filtriert und der pH-Wert mit Ammoniaklösung (12%-ig in Wasser) auf 8,5 eingestellt. Der Feststoffgehalt (FG) der Dispersion lag bei 45%.

Die Viskosität der Dispersion wurde durch Verdünnung mit Wasser auf 300 mPa.s (Bestimmung mittels eines Brookfieldviskosimeters, bei 23°C, unter Verwendung von Spindel 1 bei 20 Umdrehungen pro Minute) eingestellt.

### Polymerdispersionen 2 bis 4:

Analog zu Polymerdispersion 1, mit dem Unterschied, dass folgende Mengen am Kettenregler Dodecylmercaptan eingesetzt wurden:
Polymerdispersion 2: ohne Dodecylmercaptan;
Polymerdispersion 3: 1,0 Gew.-% Dodecylmercaptan;
Polymerdispersion 4: 1,5 Gew.-% Dodecylmercaptan,
wobei sich die Angaben in Gew.-% auf das Gesamtgewicht der ethylenisch ungesättigten Monomere der jeweiligen Dosierung 1 beziehen.

### Abmischungsdispersion 5:

Wassrige Dispersion eines Copolymerisats auf Basis von 80 Gew.-% Vinylacetat und 20 Gew.-% Ethylen mit einem Feststoffgehalt von 54% und einer Glasübergangstemperatur Tg von -7°C enthaltend 1 Gew.-% Genapol LRO und 1 Gew.-% Genapol PF 40, wobei sich die Angaben in Gew.-% jeweils auf die Gesamtmasse des Copolymerisats beziehen.

### Polymerdispersion 6:

In einem 3-Liter-Dreihalskolben, ausgestattet mit einem Rückflusskühler und Ankerrührer, wurden 5,2g Natriumlaurylsulfat in 1400g deionisiertem Wasser aufgelöst. Danach wurden 1,54g Kaliumperoxodisulfat, 3,7g Ammoniaklösung (12,5%-ig in Wasser) und 250g der Dosierung 1 vorgelegt und unter Rühren (Drehzahl 150 U/min) in Stickstoffatmosphäre auf 75°C aufgeheizt.

30 Minuten nach Erreichen von 75°C wurde damit begonnen, den restlichen Teil der Dosierung 1 während eines Zeitraums von 2 Stunden und, räumlich davon getrennt, die Dosierung 2 während eines Zeitraums von 2,5 Stunden zuzugeben.

Nach dem Ende der Zugabe der Dosierung 2 wurde für weitere 2 Stunden bei 85°C nachpolymerisiert.

Nach der Abkühlung auf Raumtemperatur wurde die Dispersion in einen 10-Liter-Behälter überführt und unter Rühren mit deionisiertem Wasser verdünnt und der pH-Wert mit einer Ammoniaklösung (12%-ig in Wasser) auf 8,5 eingestellt, wodurch schließlich eine Lösung mit einem Feststoffgehalt von 20 Gew.-% erhalten wurde. Die Glasübergangstemperatur Tg des so erhaltenen Schutzkolloids betrug 70°C.

### Dosierung 1:

| | |
|---|---|
| Methacrylsäure | 102,9g |
| n-Butylacrylat | 411,4g |
| Methylmethacrylat | 514,3g |
| Dodecylmercaptan | 10,3g |

### Dosierung 2:

| | |
|---|---|
| Wasser | 163,0g |
| Kaliumperoxodisulfat | 1,54g |

### Herstellung der LPA durch Trocknen der Polymerdispersionen:

Die Sprühtrocknung erfolgte dabei in gängiger Weise mit einer Sprühtrocknungsanlage, wobei die Zerstäubung mittels einer Zweistoffdüse erfolgte. Die Austrittstemperatur wurde betrug 75°C.

Die Viskosität der Polymerdispersionen wurde vor der Sprühtrocknung durch Verdünnung mit Wasser auf 300 mPa.s eingestellt.

Nach der Sprühtrocknung wurden das jeweilige LPA als rieselfähiges Pulver mit einer mittleren Teilchengröße von 60 µm erhalten.

Zur Bestimmung der Viskosität des jeweiligen LPA in Styrol wurde das jeweilige LPA unter Rühren in Styrol bei Raumtemperatur 30 Minuten dispergiert und die Viskosität nach 24 Stunden Lagerung bei 23°C wie in der Tabelle angegeben bestimmt.

**Tabelle 1: LPA und deren Eigenschaften:**

| **LPA** | **Polymerdispersion** | **Mittlere Korngröße** [µm]** | **Viskosität*** [mPa.s]** |
|---|---|---|---|
| LPA-1 | Polymerdispersion 1 | 60 | 7.500 |
| LPA-4 | Polymerdispersion 4 | 60 | 500 |
| LPA-5 | 50% Abmischungsdispersion 5* | 60 | 7.000 |
| | 50% Polymerdispersion 6* | | |

| | | | |
|---|---|---|---|
| *: die Angaben in % beziehen sich auf das Trockengewicht der Abmischungsdispersion 5 und der Polymerdispersion 6; **: Bestimmung nach Coulter mit dem Gerät Beckmann-Coulter LS100Q. ***: Brookfield-Viskosität: bestimmt in Styrol bei einem Feststoffgehalt von 30% nach 24 Stunden Lagerung bei 23°C, unter Verwendung von Spindel 5 bei 20 Umdrehungen pro Minute. | | | |

### Herstellung von Komposit-Bauteilen:

Zuerst wurden das UP-Harz und alle Additive (s. Tabelle 2) ohne Glasfasern und Füllstoff (Calziumcarbonat) mit einem Dissolver in einem Behälter 2 Minuten vorgemischt (Harzpaste). Im zweiten Schritt wird diese Harzpaste in einem kleinen Laborkneter mit den Glasfasern und dem Calziumcarbonat vermischt. Die Knetzeit wurde dabei zwischen 5 und 20 Minuten variiert.

**Tabelle 2: Rezepturen zur Herstellung der Komposit-Bauteile:**

| **Komponenten** | **ohne LPA** | **mit C501** | **mit LPA-1** | **mit LPA-4** | **mit LPA-5** |
|---|---|---|---|---|---|
| Gewicht | [g] | [g] | [g] | [g] | [g] |
| UP-Harz (Palapreg P 18-21 | 60 | 60 | 60 | 60 | 60 |
| Pigment (CC Russ 9257-45) | 10 | 10 | 10 | 10 | 10 |
| LPA: C 501 | | 13 | | | |
| LPA-1 | | | 13 | | |
| LPA-4 | | | | 13 | |
| LPA-5 | | | | | 13 |
| Styrol | 27 | 27 | 27 | 27 | 27 |
| Peroxid (trigonox C) | 1 | 1 | 1 | 1 | 1 |
| Peroxid (trigonox 21) | 0,5 | 0,5 | 0,5 | 0,5 | 0,5 |
| Additive BYK 9010 | 0,5 | 0,5 | 0,5 | 0,5 | 0,5 |
| Luvatol MK 35 | 3 | 3 | 3 | 3 | 3 |
| Calziumstearate (Trennmittel) | 4 | 4 | 4 | 4 | 4 |
| Füller (Millicarb OG) | 300 | 300 | 300 | 300 | 300 |
| Stabilisator (Hydrochinon) | 0,03 | 0,03 | 0,03 | 0,03 | 0,03 |
| Glassfaser (Owens Corning 163D-14C (4mm) ) | 45 | 45 | 45 | 45 | 45 |
| **Summe** | **451** | **464** | **464** | **464** | **464** |
| Konzentration LPA/Gesamtgewicht | 0,0% | 2,8% | 2,8% | 2,8% | 2,8% |

| | | | | | |
|---|---|---|---|---|---|
| a) C 501: Festharz auf Basis von 99 Gew.-% Vinylacetat, 1 Gew.-% Crotonsäure; hergestellt mittels Lösungspolymerisation. | | | | | |

Der fertige BMC-Compound (Bulk molding compound) wurde styroldicht eingepackt und 2 Tage gelagert (Reifezeit). Dann wurde der BMC-Compound in die Wickert-Presse eingelegt. Pressbedingungen waren 160°C, 3 Minuten, 730 KN Presskraft, Plattendicke 3 mm.

Die so erhaltenen, schwarz-pigmentierten Platten wurden nach Abkühlung auf Raumtemperatur wie folgt ausgetestet:
- zur Charakterisierung der mechanischen Eigenschaft wurde das E-Modul gemäß DIN EN ISO 1425 bestimmt;
- Schrumpfwerte (linearer Schrumpf): Volumenänderung wurde mittels Abmessen bestimmt und in Prozent-Werten angegeben. Minuswerte zeigen an, dass das Komposit-Bauteil größer als die ursprüngliche Form war.
- die Pigmentierung wurde nach optischen Beurteilungskriterien bestimmt:
   0 = sehr schlecht: Oberfläche der Platte nicht homogen gefärbt;
   1 = gut: Oberfläche der Platte homogen gefärbt, jedoch mit geringfügigem grauen Farbschleier;
   2 = sehr gut: Oberfläche der Platte homogen gefärbt, wie bei perfekten einem Farbanstrich; ohne Farbschleier.

Die Ergebnisse der Austestung sind in Tabelle 3 aufgeführt.

**Tabelle 3: Austestung der Komposit-Bauteile:**

| **Eigenschaften** | **ohne LPA** | **mit C501** | **mit LPA-1** | **mit LPA-4** | **mit LPA-5** |
|---|---|---|---|---|---|
| Knetzeit | 5 min | 5 min | 5 min | 5 min | 5 min |
| Linearer Schrumpf [%] | 0,41 | 0,07 | 0,06 | 0,10 | 0,05 |
| Pigmentierbarkeit | 2 | 0-1 | 2 | 0-1 | 2 |
| E-Modul** [Mpa] | 12584 | 14219 | 13602 | 14244 | 11000 |
| Wasseraufnahme [%] | 0,20 | 0, 30 | 0,20 | 0,30 | 0,40 |

| | | | | | |
|---|---|---|---|---|---|
| * Wasseraufnahme: bestimmt nach DIN ISO 62, 4 d, 23°C [%]; **E-Modul: bestimmt nach DIN EN ISO 1425. | | | | | |

Im Vergleich zum Komposit-Bauteil ohne LPA ergeben die erfindungsgemäßen LPA-1 und LPA-4 den gewünscht großen Antischrumpfeffekt, wie die herkömmlichen, etablierten LPA C501 oder LPA-5. Die erfindungsgemäßen Kompositbauteile mit LPA-1 bzw. LPA-4 zeigen gegenüber dem Komposit-Bauteil enthaltend das herkömmliche Schutzkolloid-stabilisierte LPA-5 eine geringere Wasseraufnahme und damit eine verbesserte Alterungsbeständigkeit und zudem ein größeres E-Modul. Mit LPA-1 wurde zudem ein Komposit-Bauteil mit hervorragender Pigmentierbarkeit erhalten. Auf Grund der sehr guten Löslichkeit bzw. Dispergierbarkeit der LPA-1 und LPA-4 in Styrol war deren Verarbeitbarkeit hervorragend, insbesondere im Vergleich zu C501.

## Patentansprüche

1. Verwendung von funktionelle Gruppen tragenden Polymerisaten (funktionalisierte Polymerisate) als Low-Profile-Additive (LPA), **dadurch gekennzeichnet, dass** die funktionelle Gruppen tragenden Polymerisate erhältlich sind mittels radikalisch initiierter Emulsions- oder Suspensionspolymerisation in wässrigem Medium von
a) einem oder mehreren ethylenisch ungesättigten Monomeren, die ein oder mehrere zusätzliche funktionelle Gruppen tragen ausgewählt aus der Gruppe umfassend Carboxyl-, Sulfat-, Sulfonat-, Phosphat-, Phosphonat-, Hydroxyl- und Stickstoff-funktionelle Gruppen (funktionelle Monomere), und
b) einem oder mehreren, von den Monomeren a) verschiedenen ethylenisch ungesättigten Monomeren, und anschließendem Trocknen der so erhaltenen wässrigen Dispersionen oder wässrigen Lösungen,
wobei in den wässrigen Dispersionen oder wässrigen Lösungen beim Trocknen ≤ 15 Gew.-%, bezogen auf das Trockengewicht der zu trocknenden wässrigen Dispersionen oder wässrigen Lösungen, an einem oder mehreren weiteren, von den funktionelle Gruppen tragenden Polymerisaten verschiedenen, gegebenenfalls Schutzkolloid-stabilisierten Polymeren (Abmischungspolymerisate) enthalten sind.

2. Verwendung von funktionelle Gruppen tragenden Polymerisaten als Low-Profile-Additive nach Anspruch 1, **dadurch gekennzeichnet, dass** ein oder mehrere Monomere a) ausgewählt werden aus der Gruppe umfassend ethylenisch ungesättigte Carbonsäuren oder deren Salze; Monoester der Fumarsäure oder Maleinsäure oder deren Salze; mit einer oder mehreren Hydroxy-Gruppen substituierte Methacrylsäureester oder Acrylsäureester von Carbonsäuren mit unverzweigten oder verzweigten Alkoholen mit 1 bis 15 C-Atomen; ethylenisch ungesättigte Sulfonsäuren oder deren Salze; und ethylenisch ungesättigte Phosphonsäuren oder deren Salze.

3. Verwendung von funktionelle Gruppen tragenden Polymerisaten als Low-Profile-Additive nach Anspruch 1 oder 2, **dadurch gekennzeichnet, dass** die Monomere a) zu 0,5 bis 15 Gew.-% eingesetzt werden, bezogen auf die Gesamtmasse der Monomere a) und b).

4. Verwendung von funktionelle Gruppen tragenden Polymerisaten als Low-Profile-Additive nach Anspruch 1 bis 3, **dadurch gekennzeichnet, dass** ein oder mehrere Monomere b) ausgewählt werden aus der Gruppe umfassend Vinylester von Carbonsäuren mit 1 bis 15 C-Atomen, Methacrylsäureester oder Acrylsäureester von Carbonsäuren mit unverzweigten oder verzweigten Alkoholen mit 1 bis 15 C-Atomen, Vinylaromaten, Vinylhalogenide, Diene und Olefine.

5. Verwendung von funktionelle Gruppen tragenden Polymerisaten als Low-Profile-Additive nach Anspruch 1 bis 4, **dadurch gekennzeichnet, dass** die Monomere b) zu 85 bis 99,5 Gew.-% eingesetzt werden, bezogen auf die Gesamtmasse der insgesamt eingesetzten Monomere a) und b).

6. Verwendung von funktionelle Gruppen tragenden Polymerisaten als Low-Profile-Additive nach Anspruch 1 bis 5, **dadurch gekennzeichnet, dass** als Monomere b) mindestens ein Monomer b1) ausgewählt aus der Gruppe umfassend Butylacrylat, Butylmethacrylat, 2-Ethylhexylacrylat und Vinylester von alpha-verzweigten Monocarbonsäuren mit 5 bis 13 C-Atomen, und mindestens ein Monomer b2) ausgewählt aus der Gruppe umfassend Methylacrylat, Methylmethacrylat, Styrol und Methylstyrol eingesetzt werden.

7. Verwendung von funktionelle Gruppen tragenden Polymerisaten als Low-Profile-Additive nach Anspruch 1 bis 6, **dadurch gekennzeichnet, dass** die funktionelle Gruppen tragenden Polymerisate basieren auf
a) 0,5 bis 8 Gew.-% an einem oder mehreren Monomeren ausgewählt aus der Gruppe umfassend Crotonsäure, Itaconsäure, Fumarsäure und Maleinsäure, Acrylsäure, Methacrylsäure und Hydroxyethylacrylat;
b1) 4,5 bis 22 Gew.-% an einem oder mehreren Monomeren ausgewählt aus der Gruppe umfassend Vinylester von alpha-verzweigten Monocarbonsäuren mit 5 bis 13 C-Atomen, 2-Ethylhexylacrylat, Butylacrylat und Butylmethacrylat; und
b2) 70 bis 95 Gew.-% an einem oder mehreren Monomeren ausgewählt aus der Gruppe umfassend umfassend Methylacrylat, Methylmethacrylat, Styrol und Methylstyrol;
wobei sich die Angaben in Gew.-% auf jeweils 100 Gew.-% aufaddieren.

8. Verwendung von funktionelle Gruppen tragenden Polymerisaten als Low-Profile-Additive nach Anspruch 1 bis 7, **dadurch gekennzeichnet, dass** die funktionelle Gruppen tragenden Polymerisate in 30 %-iger styrolischer Lösung oder 30 %-iger styrolischer Dispersion eine Brookfieldviskosität von 1.000 bis 10.000 mPas haben (bestimmt mittels Brookfieldviskosimeter, bei 23°C, unter Verwendung von Spindel 3 bei 20 Umdrehungen pro Minute).

9. Verwendung von funktionelle Gruppen tragenden Polymerisaten als Low-Profile-Additive nach Anspruch 1 bis 8, **dadurch gekennzeichnet, dass** während der Emulsions- oder Suspensionspolymerisation zur Herstellung der funktionelle Gruppen tragenden Polymerisate ein oder mehrere Regler eingesetzt werden.

10. Verwendung von funktionelle Gruppen tragenden Polymerisaten als Low-Profile-Additive nach Anspruch 1 bis 9, **dadurch gekennzeichnet, dass** ein oder mehrere weitere Polymere (Abmischungspolymerisate), die von den funktionelle Gruppen tragenden Polymerisaten verschieden sind, erhältlich sind durch radikalisch initiierte Polymerisation von einem oder mehreren ethylenisch ungesättigten Monomeren c) ausgewählt aus der Gruppe umfassend Vinylester von Carbonsäuren mit 1 bis 15.C-Atomen, Methacrylsäureester oder Acrylsäureester von Carbonsäuren mit unverzweigten oder verzweigten Alkoholen mit 1 bis 15 C-Atomen, Vinylaromaten, Vinylhalogenide, Diene und Olefine.

11. Verwendung von funktionelle Gruppen tragenden Polymerisaten als Low-Profile-Additive nach Anspruch 1 bis 10, **dadurch gekennzeichnet, dass** die Produkte des Trocknens der wässrigen Dispersionen oder wässrigen Lösungen enthaltend funktionelle Gruppen tragende Polymerisate kein Schutzkolloid enthalten.

12. Verwendung von funktionelle Gruppen tragenden Polymerisaten als Low-Profile-Additive nach Anspruch 1 bis 11, **dadurch gekennzeichnet, dass** die funktionelle Gruppen tragenden Polymerisate Glasübergangstemperaturen Tg von mindestens 40°C haben.

## Claims

1. Use of polymers bearing functional groups (functionalized polymers) as low-profile additives (LPAs), **characterized in that** the polymers bearing functional groups are obtainable by emulsion or suspension polymerization initiated by free radicals, in an aqueous medium, of
a) one or more ethylenically unsaturated monomers which bear one or more additional functional groups selected from the group comprising carboxy-, sulphate-, sulphonate-, phosphate-, phosphonate-, hydroxy- and nitrogen-functional groups (functional monomers), and
b) one or more ethylenically unsaturated monomers different from the monomers a), and then drying the resultant aqueous dispersions or aqueous solutions, where the aqueous dispersions or aqueous solutions comprise, during the drying procedure, ≤ 15% by weight, based on the dry weight of the aqueous dispersions or aqueous solutions to be dried, of one or more other, optionally protective-colloid-stabilized polymers (blend polymers) different from the polymers bearing functional groups.

2. Use, as low-profile additives according to Claim 1, of polymers bearing functional groups, **characterized in that** one or more monomers a) are selected from the group comprising ethylenically unsaturated carboxylic acids and salts thereof; monoesters of fumaric acid or maleic acid and salts thereof; mono- or polyhydroxylated methacrylic and acrylic esters with unbranched or branched alcohols having from 1 to 15 C atoms; ethylenically unsaturated sulphonic acids and salts thereof; and ethylenically unsaturated phosphonic acids and salts thereof.

3. Use, as low-profile additives according to Claim 1 or 2, of polymers bearing functional groups, **characterized in that** the quantity used of the monomers a) is from 0.5 to 15% by weight, based on the entirety of the monomers a) and b).

4. Use, as low-profile additives according to Claims 1 to 3, of polymers bearing functional groups, **characterized in that** one or more monomers b) are selected from the group comprising vinyl esters of carboxylic acids having from 1 to 15 C atoms, methacrylic esters or acrylic esters with unbranched or branched alcohols having from 1 to 15 C atoms, vinylaromatics, vinyl halides, dienes and olefins.

5. Use, as low-profile additives according to Claims 1 to 4, of polymers bearing functional groups, **characterized in that** the quantity used of the monomers b) is from 85 to 99.5% by weight, based on the entirety of the monomers a) and b) used.

6. Use, as low-profile additives according to Claims 1 to 5, of polymers bearing functional groups, **characterized in that** monomers b) used comprise at least one monomer b1) selected from the group comprising butyl acrylate, butyl methacrylate, 2-ethylhexyl acrylate and vinyl esters of alpha-branched monocarboxylic acids having from 5 to 13 C atoms, and at least one monomer b2) selected from the group comprising methyl acrylate, methyl methacrylate, styrene and methylstyrene.

7. Use, as low-profile additives according to Claims 1 to 6, of polymers bearing functional groups, **characterized in that** the polymers bearing functional groups are based on
a) from 0.5 to 8% by weight of one or more monomers selected from the group comprising crotonic acid, itaconic acid, fumaric acid and maleic acid, acrylic acid, methacrylic acid and hydroxyethyl acrylate;
b1) from 4.5 to 22% by weight of one or more monomers selected from the group comprising vinyl esters of alpha-branched monocarboxylic acids having from 5 to 13 C atoms, 2-ethylhexyl acrylate, butyl acrylate and butyl methacrylate; and
b2) from 70 to 95% by weight of one or more monomers selected from the group comprising methyl acrylate, methyl methacrylate, styrene and methylstyrene;
where the sum of the % by weight values is in each case 100% by weight.

8. Use, as low-profile additives according to Claims 1 to 7, of polymers bearing functional groups, **characterized in that** the Brookfield viscosity of the polymers bearing functional groups in 30% styrenic solution or 30% styrenic dispersion is from 1000 to 10 000 mPas (determined by means of Brookfield viscometer at 23°C using spindle 3 at 20 revolutions per minute).

9. Use, as low-profile additives according to Claims 1 to 8, of polymers bearing functional groups, **characterized in that** the emulsion or suspension polymerization for the production of the polymers bearing functional groups uses one or more regulators.

10. Use, as low-profile additives according to Claims 1 to 9, of polymers bearing functional groups, **characterized in that** one or more other polymers (blend polymers) different from the polymers bearing functional groups are obtainable via polymerization, initiated by free radicals, of one or more ethylenically unsaturated monomers c) selected from the group comprising vinyl esters of carboxylic acids having from 1 to 15 C atoms, methacrylic esters or acrylic esters with unbranched or branched alcohols having from 1 to 15 C atoms, vinylaromatics, vinyl halides, dienes and olefins.

11. Use, as low-profile additives according to Claims 1 to 10, of polymers bearing functional groups, **characterized in that** the products of the drying of the aqueous dispersions or aqueous solutions comprising polymers bearing functional groups comprise no protective colloid.

12. Use, as low-profile additives according to Claims 1 to 11, of polymers bearing functional groups, **characterized in that** the glass transition temperatures Tg of the polymers bearing functional groups are at least 40°C.

## Revendications

1. Utilisation de polymérisats portant des groupes fonctionnels (polymérisats fonctionnalisés), en tant qu'additifs Low-Profile (LPA), **caractérisée en ce que** les polymérisats portant des groupes fonctionnels peuvent être obtenus par polymérisation en émulsion ou suspension à amorçage radicalaire en milieu aqueux de
a) un ou de plusieurs monomères à insaturation éthylénique qui portent un ou plusieurs groupes fonctionnels supplémentaires choisis dans le groupe comprenant des groupes à fonction carboxy, sulfate, sulfonate, phosphate, phosphonate, hydroxy et azotée (monomères fonctionnels) et
b) un ou plusieurs monomères à insaturation éthylénique différents des monomères a), et séchage subséquent des dispersions aqueuses ou solutions aqueuses ainsi obtenues,
dans les dispersions aqueuses ou solutions aqueuses sont contenus au séchage ≤ 15 % en poids, par rapport au poids sec des dispersions aqueuses ou solutions aqueuses à sécher, d'un ou de plusieurs autres polymères (polymérisats de mélange) éventuellement stabilisés par colloïdes protecteurs, différents des polymérisats portant des groupes fonctionnels.

2. Utilisation de polymérisats portant des groupes fonctionnels, en tant qu'additifs Low-Profile, selon la revendication 1, **caractérisée en ce qu'**un ou plusieurs monomères a) sont choisis dans le groupe comprenant des acides carboxyliques à insaturation éthylénique ou leurs sels ; des monoesters de l'acide fumarique ou de l'acide maléique ou leurs sels ; des esters d'acide méthacrylique ou des esters d'acide acrylique, substitués par un ou plusieurs groupes hydroxy, avec des alcools ramifiés ou non ramifiés ayant de 1 à 15 atomes de carbone ; des acides sulfoniques à insaturation éthylénique ou leurs sels ; et des acides phosphoniques à insaturation éthylénique ou leurs sels.

3. Utilisation de polymérisats portant des groupes fonctionnels, en tant qu'additifs Low-Profile, selon la revendication 1 ou 2, **caractérisée en ce qu'**on utilise les monomères a) à raison de 0,5 à 15 % en poids, par rapport à la masse totale des monomères a) et b).

4. Utilisation de polymérisats portant des groupes fonctionnels, en tant qu'additifs Low-Profile, selon l'une quelconque des revendications 1 à 3, **caractérisée en ce qu'**un ou plusieurs monomères b) sont choisis dans le groupe comprenant des esters vinyliques d'acides carboxyliques ayant de 1 à 15 atomes de carbone, des esters d'acide méthacrylique ou des esters d'acide acrylique avec des alcools ramifiés ou non ramifiés ayant de 1 à 15 atomes de carbone, des composés vinylaromatiques, des halogénures de vinyle, des diènes et des oléfines.

5. Utilisation de polymérisats portant des groupes fonctionnels, en tant qu'additifs Low-Profile, selon l'une quelconque des revendications 1 à 4, **caractérisée en ce qu'**on utilise les monomères b) à raison de 85 à 99,5 % en poids, par rapport à la masse totale des monomères a) et b) utilisés au total.

6. Utilisation de polymérisats portant des groupes fonctionnels, en tant qu'additifs Low-Profile, selon l'une quelconque des revendications 1 à 5, **caractérisée en ce qu'**on utilise comme monomères b) au moins un monomère b1) choisi dans le groupe comprenant l'acrylate de butyle, le méthacrylate de butyle, l'acrylate de 2-éthylhexyle et des esters vinyliques d'acides monocarboxyliques α-ramifiés ayant de 5 à 13 atomes de carbone, et au moins un monomère b2) choisi dans le groupe comprenant l'acrylate de méthyle, le méthacrylate de méthyle, le styrène et le méthylstyrène.

7. Utilisation de polymérisats portant des groupes fonctionnels, en tant qu'additifs Low-Profile, selon l'une quelconque des revendications 1 à 6, **caractérisée en ce que** les polymérisats portant des groupes fonctionnels sont à base de
a) 0,5 à 8 % en poids d'un ou de plusieurs monomères choisis dans le groupe comprenant l'acide crotonique, l'acide itaconique, l'acide fumarique et l'acide maléique, l'acide acrylique, l'acide méthacrylique et l'acrylate d'hydroxyéthyle ;
b1) 4,5 à 22 % en poids d'un ou de plusieurs monomères choisis dans le groupe comprenant des esters vinyliques d'acides monocarboxyliques alpha-ramifiés ayant de 5 à 13 atomes de carbone, l'acrylate de 2-éthylhexyle, l'acrylate de butyle et le méthacrylate de butyle ; et
b2) 70 à 95 % en poids d'un ou de plusieurs monomères choisis dans le groupe comprenant l'acrylate de méthyle, le méthacrylate de méthyle, le styrène et le méthylstyrène ; les données en % en poids s'additionnant chaque fois à 100 % en poids.

8. Utilisation de polymérisats portant des groupes fonctionnels, en tant qu'additifs Low-Profile, selon l'une quelconque des revendications 1 à 7, **caractérisée en ce que** les polymérisats portant des groupes fonctionnels ont en solution à 30 % dans du styrène ou en dispersion à 30 % dans du styrène une viscosité Brookfield de 1 000 à 10 000 mPa.s (déterminée à l'aide du viscosimètre de Brookfield, à 23 °C, avec utilisation de la broche à 3 à 20 tours par minute).

9. Utilisation de polymérisats portant des groupes fonctionnels, en tant qu'additifs Low-Profile, selon l'une quelconque des revendications 1 à 8, **caractérisée en ce que** pendant la polymérisation en émulsion ou suspension pour la préparation des polymérisats portant des groupes fonctionnels on utilise un ou plusieurs régulateurs.

10. Utilisation de polymérisats portant des groupes fonctionnels, en tant qu'additifs Low-Profile, selon l'une quelconque des revendications 1 à 9, **caractérisée en ce qu'**un ou plusieurs autres polymères (polymérisats en mélange), qui sont différents des polymérisats portant des groupes fonctionnels, peuvent être obtenus par polymérisation à amorçage radicalaire d'un ou de plusieurs monomères à insaturation éthylénique c) choisis dans le groupe comprenant des esters vinyliques d'acides carboxyliques ayant de 1 à 15 atomes de carbone, des esters d'acide méthacrylique ou des esters d'acide acrylique avec des alcools ramifiés ou non ramifiés ayant de 1 à 15 atomes de carbone, des composés vinylaromatiques, des halogénures de vinyle, des diènes et des oléfines.

11. Utilisation de polymérisats portant des groupes fonctionnels, en tant qu'additifs Low-Profile, selon l'une quelconque des revendications 1 à 10, **caractérisée en ce que** les produits du séchage des dispersions aqueuses ou solutions aqueuses contenant des polymérisats portant des groupes fonctionnels ne contiennent aucun colloïde protecteur.

12. Utilisation de polymérisats portant des groupes fonctionnels, en tant qu'additifs Low-Profile, selon l'une quelconque des revendications 1 à 11, **caractérisée en ce que** les polymérisats portant des groupes fonctionnels ont des températures de transition vitreuse Tg d'au moins 40 °C.
